Europäisches Patentamt

European Patent Office

Office européen des brevets

(11) Publication number: **0 218 038**
**B1**

(12) **EUROPEAN PATENT SPECIFICATION**

(45) Date of publication of the patent specification:
26.07.89

(51) Int. Cl.⁴: **B29C 51/42, B29C 67/20**

(21) Application number: **86110926.2**

(22) Date of filing: **07.08.86**

(54) Mould for the production of vacuum-formed, trim-covered articles.

(30) Priority: **14.09.85 GB 8522798**

(43) Date of publication of application:
**15.04.87 Bulletin 87/16**

(45) Publication of the grant of the patent:
**26.07.89 Bulletin 89/30**

(84) Designated Contracting States:
**DE FR IT**

(56) References cited:
**DE-B- 2 240 769**
**US-A- 3 137 747**
**US-A- 3 185 432**
**US-A- 4 046 611**
**US-A- 4 063 705**

(73) Proprietor: **DUNLOP LIMITED, Silvertown House Vincent Square, London SW1P 2PL(GB)**

(72) Inventor: **Atkin, Howard Stuart, 2A Arncliffe Road, Harrogate North Yorkshire(GB)**
Inventor: **Gibson, Neil Skeen, 2 Regents Close Aberaman, Aberdare Mid-Glamorgan Wales(GB)**
Inventor: **Griffiths, Phillip Martin, 29 Laurel Close Cwmdare, Aberdare Mid-Glamorgan Wales(GB)**

(74) Representative: **Moore, John Hamilton et al, Dunlop Limited Group Patent Department P.O. Box 504, Erdington Birmingham B24 9QH(GB)**

ACTORUM AG

## Description

This invention relates to a mould for the production of vacuum-formed, trim-covered articles. By the term "trim-covered articles" herein, there is to be understood, particularly but not exclusively, articles comprising a resilient core having an integral cover of a fabric or other sheet material. A commonly-encountered example of such an article is a seat component (e.g. a cushion or a squab) for a motor vehicle, the component comprising a foam core with an integral cover of fabric or plastics material.

A mould and moulding process such as has commonly been used hitherto for the production of such articles will be illustrated in the following description and with reference to the accompanying drawings PRIOR ART I and PRIOR ART II. In these drawings, PRIOR ART I is a schematic cross-sectional view of a conventional vacuum-forming mould and PRIOR ART II is a perspective view of a moulded product.

Referring to the drawings, a moulding portion C is supported above a vacuum chamber D, to which it is linked by means of a plurality of small-bore holes G. A layer of air-impermeable fabric A is laid over the mouth of the mould and sealed around the mould periphery at position J. A vacuum is applied to the underside of fabric A via port F and holes G. Depending upon its constitution and elastic properties, the fabric A, in response to the vacuum, either stretches or slides through the seal at position J and is drawn against the mould walls B. The mould is filled with a foam-forming mixture and closed by means of lid E. After curing the foam and removing the moulding, a moulded product H is obtained having an integral cover K.

Moulds of the aforementioned type, in which the moulding portions are generally made of a plastics or resinous material, are difficult to heat in the controlled and uniform manner which is essential for the production of acceptable mouldings. It is also difficult, when using such known moulds, to ensure that the trim material is uniformly and reproducibly applied to the inside of the mould and especially to ensure that the trim material (particularly if it is a non-stretchable fabric) is not "bunched" or creased on the one hand or excessively stretched or torn on the other.

It is known from US-A 3 137 747, which discloses the features of the precharacterising part of the independent claim, to partially provide a vacuum mould with heating elements. However, the said US-A 3 137 747 also shows that some form of "pre-heating" of the material to be moulded is required and this may not always provide an effective means of ensuring that the trim material lining the mould is not damaged during the moulding process.

It is also known from US-A 3 185 432 to provide a heating element within the cavity of a compression mould. However, this publication does not address the special problems encountered during a vacuum-moulding process.

We have found that these and other disadvantages can be overcome by providing the mould with a laminar structure which includes at least one heating element and a peripheral annular clamp which permits controlled and reproducible lining of the mould with the trim material.

Accordingly, the present invention provides a mould for use in a vacuum-forming process, said mould comprising a moulding portion and a vacuum chamber, characterised in that the moulding portion consists of a laminate which includes:

(i) at least one heating element;

(ii) one or more layers of a fibre-reinforced plastics or resinous material; and

(iii) a layer of a thermally-insulating material, and in that the vacuum chamber contains a solid porous heat-insulating material capable of withstanding compressive loads.

The present invention also provides a mould as described in the immediately-preceding paragraph, said mould additionally including a peripheral annular clamp to permit controlled and uniform lining of the mould with a trim material.

The present invention further provides a vacuum-forming process for the production of trim-covered articles and a vacuum formed, trim-covered article made thereby.

Suitably, the heating element (i) in the laminate comprising the moulding portion may consist of a plastics or resinous material containing electrically-conducting fibres, for example, a polyurethane, a polyester, an epoxy resin or a phenolic resin containing fibres of carbon, metallised carbon, stainless steel or one of the nickel-chromium alloys available under the Registered Trade Mark NICHROME.

The layers (ii) may, for example, be reinforced with fibres of, e.g. carbon, glass, aramid (such as KEVLAR) or polyamide (such as NYLON). (The words KEVLAR and NYLON are Registered Trade Marks.)

The heat-insulating material contained in the vacuum chamber is a porous material capable of withstanding compressive loads, e.g. hollow or solid plastics beads (such as polystyrene), ceramics (including glass), open-celled rigid foams (such as those available under the Registered Trade Mark OASIS), coarsely-ground talc, compressed wood-wool or horsehair.

Preferably, the peripheral annular clamp comprises two flange elements which define between them an opening for the passage, of a trim material into the mould, together with means to adjust the depth of said opening.

The present invention will be illustrated, merely by way of example, in the following description and with reference to the accompanying drawings, in which:

Figure 1 is a schematic cross-sectional view of a mould according to the present invention;

Figure 2 is an enlarged view, again in cross-section, of a portion of the mould of Figure 1;

Figure 3 is a schematic plan view of a heating element as used in the mould of Figure 1;

Figure 4 is a schematic side view of a mould according to the present invention and including a peripheral annular clamp;

Figure 5 is a plan view of the mould shown in Figure 4;

Figure 6 is a section on line VI–VI of Figure 5;

Figures 7 to 10 are schematic views of alternative embodiments of the peripheral annular clamp shown in Figures 4 to 6.

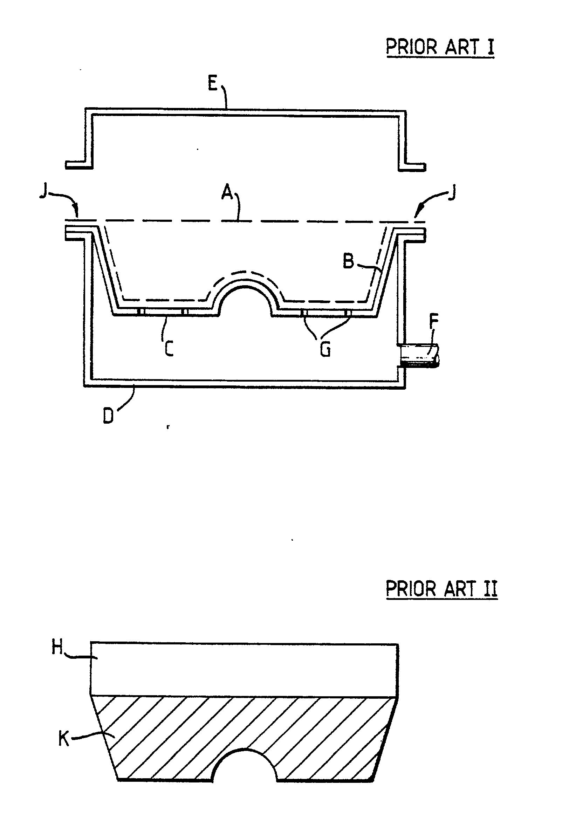

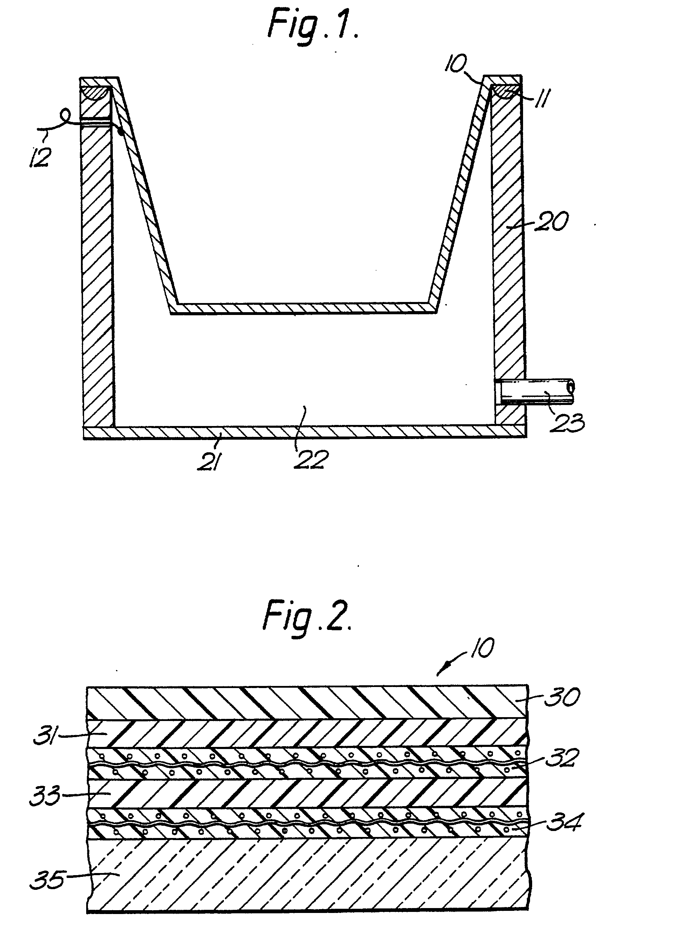

Referring to Figure 1, the moulding portion 10 is sealed at 11 around its periphery to vacuum chamber 20. The seal 11 can be removable. Alternatively, the seal 11 can be permanent, in which case the base 21 of the vacuum chamber 20 must be removable. The cavity 22, defined by the moulding portion and the vacuum chamber, is capable of evacuation (by means known per se) through port 23. Item 12 represents an electrical connection for a heating element forming part of the moulding portion 10 (see Figure 2). The cavity 22 is filled with heatinsulating material (not shown in Figure 1).

In Figure 2, the moulding portion 10 of the mould of Figure 1 is of laminar construction. The layer to be adjacent the moulding cavity (layer 30) comprises a resin-rich material which preferably includes one or more pigments capable of reversible colourchanges in response to variations in temperature. This enables an observer to see whether the mould is at the correct temperature and/or whether a fault has occurred.

Layer 31 is of a fibre-reinforced plastics or resinous material, the fibres being of glass, carbon, aramid or polyamide. This layer is sufficiently thin and rigid to ensure good heat transfer to layer 30.

Layer 32 comprises a plurality of unidirectional electrically-conducting wires which are bonded in place with a resin. These wires carry a heating current.

Layer 33 is of a plastics or resinous material and can incorporate temperature detection and control means, e.g. probes, thermistors and thermocouples. This facilitates accurate monitoring and control of the moulding temperature. Layer 33 can, if desired, additionally contain reinforcing fibres (as for layer 31). Layer 34 is a further heating layer (similar to layer 32) in which the unidirectional wires extend substantially at right angles to those of layer 32. This ensures that when vacuum holes or bolt holes are made in the mould there is no significant loss of heating or "cold spots".

Finally, layer 35 is of a thermally-insulating material.

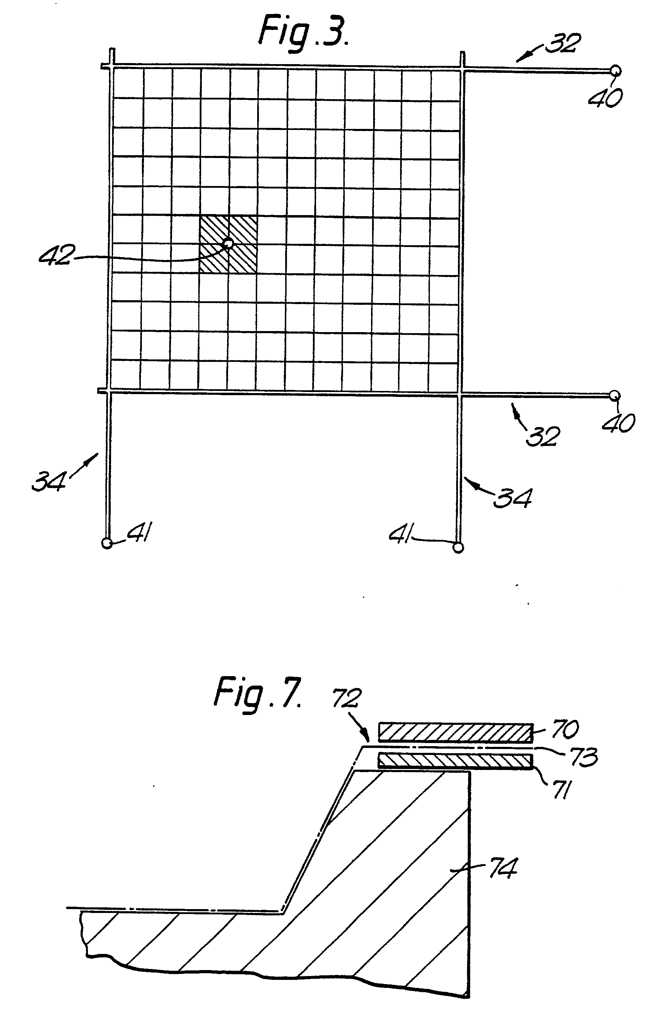

In Figure 3, a pair of unidirectional heating elements (cp items 32 and 34 in Figure 2) are shown superimposed one upon the other. The elements are provided respectively with contacts 40 and 41. The wires constituting each of the two layers 32 and 34 are preferably closely-spaced, for example from 1 to 40 wires per centimetre width in each layer. Item 42 is a hole (such as may be drilled through the laminar mould portion to serve as a vacuum hole) and it will be seen that the close spacing of the wires in layers 32 and 34 limits the area of heat loss to the cross-hatched area surrounding hole 42.

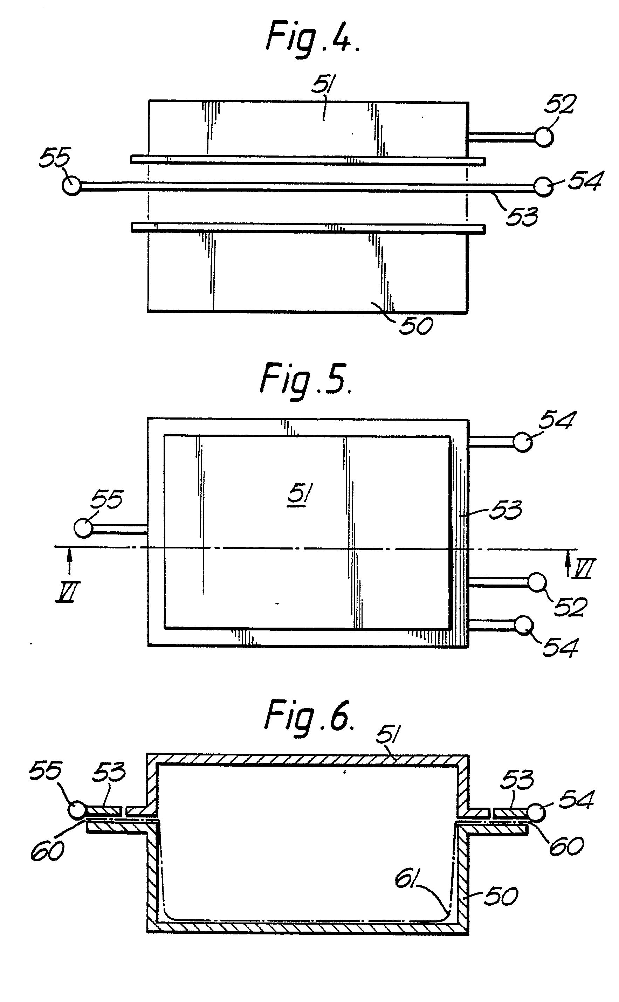

In Figures 4, 5 and 6 (wherein like numerals denote like parts) the mould comprises a moulding portion 50, a lid portion 51 hinged at 52, and a peripheral annular clamp 53 having a hinge 54 and a locking device 55. Between the clamp 53 and the moulding portion 50 there is an opening 60 for the passage of a trim material (item 61 in Figure 6) into the mould.

The depth of the opening 60 is adjustable so as to optimise the frictional resistance between the trim material and the clamp on the one hand and between the trim material and the moulding portion on the other hand.

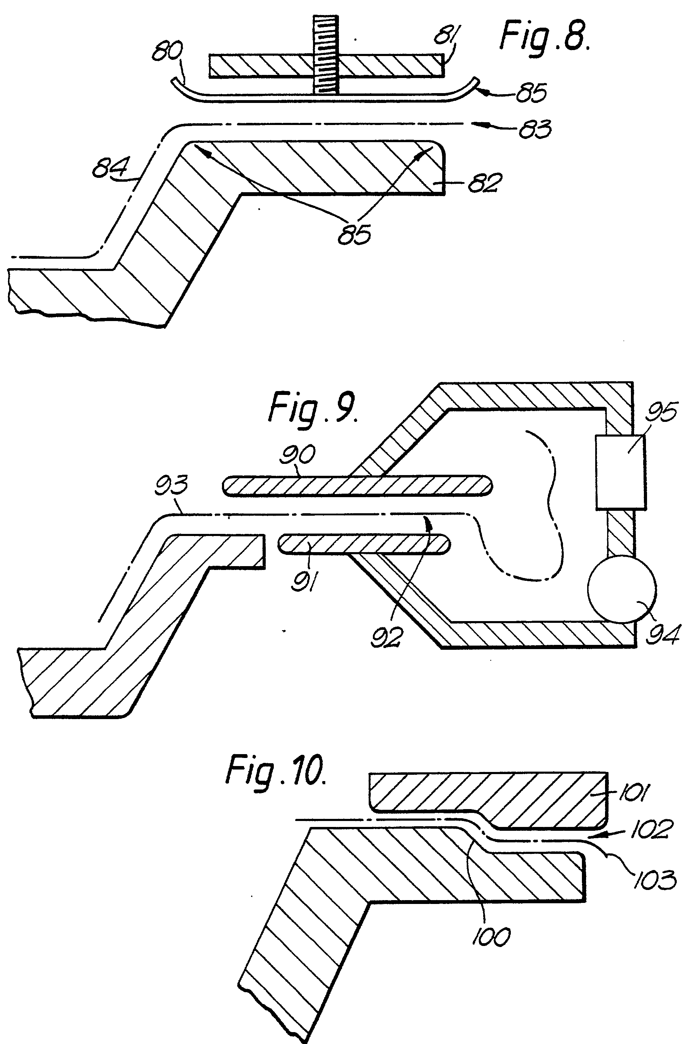

Alternative embodiments of the peripheral annular clamp are illustrated in Figures 7 to 10.

In Figure 7, the clamp consists of two flange elements 70 and 71 which define between them an opening 72 for the passage of the trim fabric 73 into the mould (part of which is indicated at 74). The position of flange elements 70 and 71 relative to each other can be varied to adjust the depth of opening 72.

In Figure 8, the clamp comprises a plate 80 having threaded adjustment means 81. The plate 80 and a peripheral flange 82 provided on the mould define between them an opening 83 for the passage of a trim material 84 into the mould. The surfaces 80 and 82 to be in contact with the trim material are smooth and, as indicated generally at 85, all curves are radiussed.

In Figure 9, the clamp comprises a pair of plates 90 and 91 defining between them an opening 92 for the passage of a trim material 93 into the mould. In this embodiment, the clamp is provided with a hinge 94 and adjusting means 95.

In Figure 10, the mould is provided with a stepped portion 100 around its periphery and the clamp is constituted by a ring member 101 of complementary shape, members 100 and 101 defining between them an opening 102 for the passage of a trim material 103 into the mould.

As described herein, the moulding portion will be of low-cost and light-weight construction. The moulds of the present invention can be repaired and replaced quickly and can be drilled to provide vacuum holes or to take mould-inserts without deleterious effects on the moulded products. The use of a vacuum ensures rapid and efficient heating of the mould and the insulating material in the vacuum chamber prevents heat loss. Furthermore, the insulating material can be used to withstand the high compressive forces exerted on the mould during the moulding process. Alternatively, fibre-reinforced ribs can be fitted to the underside of the mould to assist support.

## Claims

1. A mould for use in a vacuum-forming process, said mould comprising a moulding portion (10), a heating element in the mould wall and a vacuum chamber, characterised in that the moulding portion (10; 50) consists of a laminate which includes:
   (i) at least one heating element (32; 34)
   (ii) one or more layers (30; 31; 33) of a fibre-reinforced plastics or resinous material, and
   (iii) a layer (35) of a thermally-insulating material,
   and in that the vacuum chamber (20) contains a solid porous heat-insulating material capable of withstanding compressive loads.

2. A mould according to Claim 1, characterised in that the heating elements (32; 34) consists essentially of a plastics or resinous material (e.g. a polyurethane, a polyester, an epoxy resin or a phenolic resin) containing electrically-conducting fibres (e.g. carbon or metallised carbon fibres, stainless steel fibres or fibres of a nickel-chromium alloy).

3. A mould according to Claim 1 or 2, characterised in that the layers (30; 31; 33) are reinforced with fibres of carbon, glass, aramid or polyamide.

4. A mould according to any preceding claim, characterised in that the heat-insulating material in the vacuum chamber (20) comprises hollow or solid plastics beads, ceramics, open-celled rigid foams, compressed wood-wool, coarsely-ground talc or horsehair.

5. A mould according to any preceding claim, characterised in that the layer (30) to be adjacent the cavity of the moulding portion (10) contains one or more pigments capable of reversible colour-changes in response to variations in temperature.

6. A mould according to any preceding claim, characterised in that it includes a peripheral annular clamp (53; 70, 71; 80: 90. 91; 101) to permit controlled and uniform lining of the mould with a trim material (61; 73; 84; 93; 103).

7. A mould according to Claim 6, characterised in that the annular clamp comprises two flange elements (70, 71; 90, 91) which define between them an opening (72; 92) for the passage of the trim material (73; 93) together with means to adjust the depth of said opening.

## Revendications

1. Un moule utilisable dans un processus de formage sous vide, ledit moule comprenant une partie de moulage (10), un élément chauffant dans la paroi de moule et une chambre à vide, caractérisé en ce que la partie de moulage (10; 50) se compose d'un stratifié qui comprend:

(i) au moins un élément chauffant (32; 34),

(ii) une ou plusieurs couches (30; 31; 33) formées d'une matière résineuse ou d'une matière plastique renforcée par des fibres, et

(iii) une couche (35) d'une matière thermiquement isolante,

et en ce que la chambre à vide (20) contient une matière solide, poreuse, thermiquement isolante et capable de résister à des charges de compression.

2. Un moule selon la revendication 1, caractérisé en ce que les éléments chauffants (32; 34) se composent essentiellement d'une matière résineuse ou plastique (par exemple, un polyuréthane, un polyester, une résine époxy ou une résine phénolique) contenant des fibres électriquement conductrices (par exemple, des fibres en carbone ou en carbone métallisé, des fibres en acier inoxydable ou des fibres d'un alliage nickel-chrome).

3. Un moule selon la revendication 1 ou 2, caractérisé en ce que les couches (30; 31; 33) sont renforcées avec des fibres de carbone, de verre, d'aramide ou de polyamide.

4. Un moule selon une quelconque des revendications précédentes, caractérisé en ce que la matière thermiquement isolante prévue dans la chambre à vide (20) comprend des perles creuses de matière plastique, des matières céramiques, des mousses rigides à cellules ouvertes, de la laine de bois comprimée, du talc broyé grossièrement ou des crins de chevaux.

5. Un moule selon une quelconque des revendications précédentes, caractérisé en ce que la couche 30 qui est adjacente à la cavité de la partie de moulage (10) contient un ou plusieurs pigments capables de changements réversibles de couleurs en réponse à des variations de température.

6. Un moule selon une quelconque des revendications précédentes, caractérisé en ce qu'il comporte une attache annulaire périphérique (53, 70, 71; 80; 90, 91; 101) pour permettre un revêtement contrôlé et uniforme du moule avec une matière d'adaptation (61; 73; 84; 93; 103).

7. Un moule selon la revendication 6, caractérisé en ce que l'attache annulaire comprend deux éléments formant bride (70, 71; 90, 91) qui définissent entre eux une ouverture (72; 92) permettant le passage de la matière d'adaptation (73; 93) en coopération avec des moyens de réglage de la profondeur de ladite ouverture.

## Patentansprüche

1. Form zur Verwendung in einem Vakuumformprozeß mit einem Formenteil (10), einem Heizelement in der Formwand und einer Vakuumkammer, dadurch gekennzeichnet, daß das Formenteil (10; 50) aus einem Laminat besteht, das folgendes enthält:

(i) wenigstens ein Heizelement (32; 34)

(ii) eine oder mehrere Schichten (30; 31; 33) aus faserverstärktem Kunststoff- oder harzhaltigen Material, und

(iii) eine Schicht (35) aus thermisch isolierendem Material,

und daß die Vakuumkammer (20) ein festes, poriges, wärmeisolierendes Material enthält, das geeignet ist kompressiven Belastungen zu widerstehen.

2. Form nach Anspruch 1, dadurch gekennzeichnet, daß die Heizelemente (32; 34) im wesentlichen aus Kunststoff- oder harzhaltigem Material (z.B. ein Polyurethan, ein Polyester, ein Epoxidharz oder ein Phenolharz) bestehen, das elektrisch leitende Fasern (z.B. Kohlenstoff oder metallisierte Kohlenstoffasern, Fasern aus rostfreiem Stahl oder Fasern aus einer Nickel-Chrom-Legierung) beinhaltet.

3. Form nach Ansprüchen 1 oder 2, dadurch gekennzeichnet, daß die Schichten (30; 31; 33) mit Fasern aus Kohlenstoff, Glas, Aramid oder Polyamid verstärkt sind.

4. Form nach einem der vorhergehenden Ansprüche, dadurch gekennzeichnet, daß das wärmeisolierende Material in der Vakuumkammer (20) hohle oder feste Kunststoffkügelchen, Keramiken, offenzellige, steife Schäume, gepreßte Holzwolle, grobgründigen Talk oder Pferdehaar enthält.

5. Form nach einem der vorhergehenden Ansprüche, dadurch gekennzeichnet, daß die Schicht (30), die dem Hohlraum des Formenteils (10) am nächsten liegt, ein oder mehrere Pigmente beinhaltet, die zu reversiblen Farbumschlägen als Antwort auf Temperaturänderungen fähig sind.

6. Form nach einem der vorhergehenden Ansprüche, dadurch gekennzeichnet, daß sie eine periphere, ringförmige Klammer (53; 70, 71; 80; 90, 91; 101) enthält, um eine kontrollierte und gleichförmige Auskleidung der Form mit einem Trimmaterial (61; 73: 84; 93; 103) zu erlauben.

7. Form nach Anspruch 6, dadurch gekennzeichnet, daß die ringförmige Klammer zwei Flanschelemente (70, 71; 90, 91) enthält, die zwischen sich eine Öffnung (72; 92) definieren, für den Durchlaß des Trimmaterials (73; 93) zusammen mit Mitteln zur Einstellung der Tiefe der Öffnung.

PRIOR ART I

E

J                    A                    J

                                    B

C          G          F

D

PRIOR ART II

H

K

## Fig.1.

## Fig.2.

EP 0 218 038 B1

# Fig.3.

# Fig.7.

*Fig.4.*

*Fig.5.*

*Fig.6.*

Fig.8.

Fig.9.

Fig.10.